(19) **Europäisches Patentamt**
**European Patent Office**
**Office européen des brevets**

(11) Veröffentlichungsnummer: **0 278 297**
**A1**

(12) **EUROPÄISCHE PATENTANMELDUNG**

(21) Anmeldenummer: **88100987.2**

(22) Anmeldetag: **23.01.88**

(51) Int. Cl.⁴: **C09J 3/00** , **C09J 3/12**

(30) Priorität: **31.01.87 DE 3702871**

(43) Veröffentlichungstag der Anmeldung:
**17.08.88 Patentblatt 88/33**

(84) Benannte Vertragsstaaten:
**AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Gierenz, Gerhard, Dr.**
**Dieselstrasse 80**
**D-5650 Solingen 19(DE)**
Erfinder: **Peters, Bernd Willi**
**Gabelstrasse 13**
**D-5650 Solingen 1(DE)**

(54) **Klebestift.**

(57) Weich abreibbarer Klebstift auf Basis einer mit erstarrtem Seifengel verdickten Lösung von wasserdispergierbaren, natürlichen Polymersubstanzen mit Klebstoffcharakter in einem wässrig, organischem Lösungsmittelgemisch, dadurch gekennzeichnet, daß die Stiftmasse als klebende Komponente eine Kombination aus Naturkautschuk-Latex und klebrig machenden Harzen enthält, wobei die klebrig machenden Harze einen Erweichungspunkt oberhalb von 50 °C haben und in Form einer wässrigen, feinteiligen Emulsion vom Typ O/W eingesetzt werden.

EP 0 278 297 A1

# Klebestift

Die Erfindung betrifft einen neuartigen, weich abreibbaren Klebestift zum Auftragen dauerhaftklebriger Schichten auf Papier oder ähnlichen Flächen.

Stiftförmige starre Klebstoffe, die in einer verschließbaren Hülle verschiebbar gelagert sind und beim Abreiben auf eine Empfängerfläche einen klebrigen Film hinterlassen, sind heute Gebrauchsgegenstände des täglichen Lebens. Sie enthalten insbesondere - siehe hierzu DE-PS 18 11 466 wasserlösliche bzw. wasserdispergierbare synthetische Hochpolymere mit Klebstoffcharakter - insbesondere Polyvinylpyrrolidon (PVP) - gelöst in einer wässrig-organischen Flüssigphase zusammen mit einer formgebenden Gerüstsubstanz. Als Gerüstsubstanz werden insbesondere Natriumsalze von Fettsäuren des C-Zahlbereichs von etwa 12 bis 22, verwendet. Werden die an sich hochklebrigen wässrigen Aufbereitungen der Polymersubstanzen mit Klebstoffcharakter zusammen mit geringen Mengen der Gerüstsubstanz auf Basis von Fettsäureseifen auf höhere Temperaturen, insbesondere oberhalb 80 °C erwärmt und läßt man dann diese Lösung in Ruhe abkühlen, so erstarrt das Stoffgemisch zu einem mehr oder weniger steifen Seifengel, in dem die formgebende und vergleichsweise starre Micellstruktur solcher Seifengele zunächst überwiegend in Erscheinung tritt. Das ermöglicht die bekannte Ausbildung und Handhabung solcher Massen in Stiftform in verschließbaren Hülsen. Beim Abreiben wird die Micellstruktur zerstört und damit die starre Masse in den pastösen Zustand umgewandelt, in dem dann der Klebstoffcharakter des Stoffgemisches in den Vordergrund tritt.

Es sind zahlreiche Versuche unternommen worden, Klebestifte dieser Art durch Veränderung der formgebenden Gerüstsubstanz und/oder durch Veränderung der mit Lösungsmittel aktivierten klebstoffbildenden Komponente zu verändern. Die DE-AS 22 04 482 verwendet als formgebende Gerüstsubstanz das Reaktionsprodukt von Sorbit und Benzaldehyd. Nach der Lehre der DE-OS 26 20 721 sollen Salze von substituierten Terephathalsäureamiden als Geliermittel verwendet werden. Gemäß DEOS 20 54 503 sollen anstelle der Alkalimetallsalze von aliphatischen Carbonsäuren freie langkettige aliphatische Säuren oder deren Ester die Gerüstsubstanz darstellen. Die DE-OS 22 19 697 will solche Klebestifte dadurch verbessern, daß anionische nichtseifige Netzmittel dem Stift einverleibt werden, insbesondere um dessen Abrieb auf der Unterlage zu verbessern. Gemäß der DE-OS 24 19 067 soll als gelbildendes Mittel ein Reaktionsprodukt aus aromatischen Diisocyanaten mit Mono-und/oder Dialkanolaminen Verwendung finden.

Trotz aller dieser Vorschläge wird bis zum heutigen Tage wenigstens in weitaus überwiegendem Umfag die älteste Form der Klebestifte auf Basis von Seifengelen eingesetzt, und zwar zusammen mit Polyvinylpyrrolidon als klebende Komponente, obwohl auch mit dieser Gerüstsubstanz andere natürlich klebende Substanzen kombiniert wurden. Setzt man in an sich bekannter Weise Naturkautschuk als Klebstoff ein, erhält man durchaus brauchbare Klebestifte, die zwar bezüglich der Struktur zu wünschen übrig lassen, aber stets zu festen verfilzenden Klebungen bei Papier führen.

Die Erfindung geht von der Aufgabe aus, die weichabreibbaren Stifte in einer wichtigen Eigenschaft verbessernd umzugestalten. Das Abreiben des Stiftes auf dem Empfängerblatt soll weiterhin geschmeidig bleiben, um auch auf dünnem Papier keine Beschädigung zu erwirken. Die ausgebildete Klebstoffschicht soll demgegenüber aber einen sehr langen, offenen Zeitraum der Klebrigkeit besitzen, das heißt, sie soll auch nach dem Abtrocknen des Wassers bzw. etwa vorhandenen flüchtigen organischen Lösungsmitteln ihre Klebrigkeit behalten. Mit anderen Worten, Aufgabe der vorliegenden Erfindung war es, einen Klebestift zu entwickeln, der das Aufbringen von dauerhaftklebrigen Schichten ermöglicht.

Diese Aufgabe wird erfindungsgemäß dadurch gelöst, daß die Stiftmasse als klebende Komponente eine Kombination aus Naturkautschuk-Latex und klebrig machenden Harzen enthält. Die klebrig machenden Harze sollten einen Erweichungspunkt oberhalb 35 bis 55 °C, vorzugsweise oberhalb von 60 bis etwa 120 °C, haben.

Für den erfindungsgemäßen Zweck eignen sich Produkte aus natürlichem Harze wie Kolophonium (Balsamkolophonium, Wurzelharz, Tallharz) und gegebenenfalls Schellack. Geeignete Derivate des Kolophoniums können sowohl durch Hydrieren als auch Polymerisieren sowie mittels Anlagerung von z.B. Maleinsäureanhydrid gewonnen werden. Besondere Bedeutung haben die Ester von Kolophonium, insbesondere auch hydriertem Kolophonium, (z.B. Pentaerythrit-, Glycerin-, Diethylglykol- und Triethylenglykolester). Der Methylester von Balsamharz oder von hydrierter Abietinsäure ist wegen seiner erhöhten Migrationsneigung weniger geeignet.

Eine weitere Gruppe von erfindungsgemäß geeigneten weichmachenden Harzen sind Kohlenwasserstoffharze wie die Polycyclopentadienharze und Cumaron-Inden-Harze mit geringen Säurezahlen sowie die beim thermischen oder katalytischen Cracken von Naphtha und Gasölen als Nebenprodukt anfallenden Harztypen, die in ihrer Konstitution dem polymerisierten β-Pinen nahe kommen, jedoch keine Doppelbindungen mehr aufweisen. Auch Phenol/Resorzin-Kondensatharze und gegebenenfalls Furfurolharze kommen für den erfindungsgemäßen Zweck grundsätzlich in Frage. Diese erfindungsgemäß zu verwendenden klebrig machenden Harze sind dem Fachmann vertraut und sollten einen Erweichungspunkt oberhalb 35 bis 55 °C aufweisen. Von besonderem Interesse sind solche mit einem Erweichungsintervall von etwa 60 bis 120 °C. Der Harzanteil soll, bezogen auf die Gesamtzusammensetzung, zwischen 6 bis 45, insbesondere 8 bis 30 Gewichtsprozent liegen.

Die vorstehend beschriebenen klebrig machenden Harze werden in an sich bekannter Technik in die Klebstoffmasse eingearbeitet. Zweckmäßig verfährt man so, daß die klebrig machenden Harze in Form einer wässrigen, feinteiligen Emulsion vom Typ O/W eingesetzt werden. Zum Zweck der Herstellung einer solchen Emulsion kann man Wasser vorlegen, darin Netzmittel auflösen und das geschmolzene Harz unter intensivem Rühren zusetzen. Allerdings müssen hier erhebliche Scherkräfte eingesetzt werden. Vorteilhaft ist es daher, zu einer Schmelze aus Harz und Netzmitteln langsam auf die Temperatur der Schmelze erwärmtes Wasser zuzugeben. Dabei entsteht zunächst eine W/O-Emulsion, die oberhalb einer spezifischen Wasserkonzentration sich in eine besonders feinteilige O/W-Emulsion umwandelt. Die Technik der Herstellung derartiger Emulsionen ist dem Fachmann an sich bekannt.

Als Netzmittel zur Herstellung geeigneter Emulsionen haben sich nichionogene Typen bewährt, beispielsweise die bekannten Ethylenoxidaddukte an Alkylphenole (Nonylphenol) oder Fettalkohole oder aber auch Ethylenoxidaddukte an Polypropylenoxid. Diese nichtionogenen Netzmittel können noch durch Zusatz von anionenaktiven Netzmitteln in ihrer Wirksamkeit verbessert werden. Hier kann man beispielsweise einsetzen Ethylenoxidaddukt an Fettalkohol oder Nonylphenol, das nachträglich in Schwefelsäureester bzw. Phosphorsäureester überführt wurde. Diese anionenaktiven Netzmittel werden normalerweise in Form der Alkalisalze verwendet.

Der Kautschuk wird in Form üblicher wässriger Latices eingesetzt, die einen Feststoffgehalt zwischen etwa 60 und 75 % aufweisen. Derartige Latices sind ebenfalls Handelsprodukte. Im Stift selbst soll der Gehalt an Naturkautschuk zwischen 8 und 40, insbesondere 10 bis 35 Gewichtsprozent, liegen.

Die gelbildenden Gerüstsubstanzen für die neuen erfindungsgemäßen Klebestifte sind Natriumsalze von natürlichen und/oder synthetischen Fettsäuren. Geeignet sind insbesondere Fettsäuren des C-Zahl-Bereiches von etwa 10 bis 22, insbesondere etwa 14 bis 18. Die gerüstbildenden Natriumseifen werden in an sich bekannter Weise in einer Menge, bezogen auf die Gesamtzusammensetzung, von etwa 5 bis 14, insbesondere 8 bis 12 Gewichtsprozent, verwendet. Die eventuell mitverwendeten organischen wasserlöslichen Hilfskomponenten, nämlich aliphatische Polyole mit 3 bis 6 Kohlenstoffatomen im Molekül, werden in Mengen von 0 bis 15, bevorzugt von 5 bis 10 Gewichtsprozent, eingesetzt.

Neben den geschilderten Hauptkomponenten können übliche Hilfsstoffe mitverwendet werden, beispielsweise Substanzen, die den leichten und weichen Abrieb fördern, beispielsweise Sorbit. Es können weiterhin Pigmente, Farbstoffe, Geruchsverbesserer und dergleichen eingesetzt werden. Geeignete Polyole sind neben dem vorstehend erwähnten Sorbit insbesonder Glycerin. Es können aber auch eingesetzt werden Ethylenglykol, Diethylenglykol, Triethylenglykol sowie Propylenglykol, Trimethylolpropan und Trimethylolethan, ferner Polyethylenglykole bis zu einem Molgewicht von etwa 200 bis 1000.

Die Herstellung der Mischung erfolgt in an sich bekannter Weise und man geht zweckmäßig so vor, daß zunächst Wasser und wassermischbare organische Lösungsmittel vorgelegt werden. In diese Mischung wird dann entweder das Natriumsalz der Fettsäuren als solches eingetragen oder aber die Bildungskomponenten, nämlich Fettsäure und Natronlauge. Unter Erwärmen bis auf etwa 65 bis 80 °C werden dann die übrigen Bestandteile zugesetzt, das heißt, der Naturkautschuk-Latex sowie das klebrig machende Harz, und zwar vorzugsweise in Form einer sehr feinteiligen Emulsion. Man kann aber auch alle notwendigen Komponenten - wässriger Latex und wässriger Harzdispersionen als solche - auf einmal mit allen anderen Komponenten zusammengeben und dann unter Rühren auf die vorstehend angegebene Temperatur erwärmen.

Die Masse wird so lange auf 80 bis 85 °C, eventuell 95 °C, gehalten, bis sie völlig homogen erscheint. Nachdem die Stiftmasse homogen und blasenfrei ist, kann sie in für Klebestifte geeignet Hüllen abgefüllt werden. Das Abfüllen der Stiftmasse kann bei Temperaturen zwischen etwa 60 und 80 °C erfolgen. Bei diesen Temperaturen liegt eine Viskosität zwischen etwa 10 und 50 Pa·s.

Nach dem Abkühlen werden weich abreibbare aber formstabile Klebestifte erhalten, die sich leicht auf Flächen der verschiedensten Art wie Pappe, Holz, Holzwerkstoffe, Glas, thermoplastische wie duroplastische Kunststoffe auftragen lassen. Sie trocknen zu haftklebrigen Schichten auf. Besonders eignen sich die neuartigen Stifte zum Kleben von - auch dünnen und empfindlichen - Papieren.

## Beispiel 1

In einem mit Rührer und Rückflußkühler sowie Heizmöglichkeit ausgestatteten 250 ml fassenden Rundkolben wurden 45 g Wasser sowie 6 g Glycerin (86 Gew.-%), zusammen mit je 5 g Natriumpalmitat und Natriumstearat unter Rühren auf 50 °C erwärmt. Nachdem eine homogene Lösung erhalten worden war, wurden dazu nacheinander gegeben

16,5 g Naturkautschuk Latex (73 Gew.-%) sowie 22,2 g einer Dihydroabietylphthalat-Emulsion (36,5 gew.-%ig in Wasser, Erweichungsbereich des Harzes 60 bis 70 °C). Unter weiterem Erwärmen bis auf 75 °C wurde noch eine 1/4 Stunde gerührt. Nachdem die Temperatur innerhalb 10 Minuten bis auf 95 °C gesteigert worden war, wurde die Masse in für Klebestifte bekannte Hülsen eines Durchmessers von 16 mm abgefüllt und erkalten gelassen.

Man erhielt formstabile Klebestifte, die sich auf Papier und sonstige Oberflächen gut abreiben ließen und zu einem dauerklebrigen Klebefilm antrockneten. Mit diesem Klebestift hergestellte Klebungen konnten auch nach längerer Zeit ohne Papierriß gelöst werden und zeigten auch beim Erwärmen auf 60 °C für 3 Stunden im Trockenschrank keine Verfärbungen auf vielen handelsüblichen Papieren.

## Beispiel 2

In einem wie oben beschrieben ausgestatteten Rührgefäß wurden 56 g einer 54 gew.-%igen Emulsion eines Terpen-Phenol-Harzes (Erweichungsbereich des Harzes 64 bis 73 °C) und 9 g Glyzerin (86 Gew.-%) sowie 15 g Natriummyristat unter Rühren auf 60 °C erwärmt. Danach wurden 70 g eines Naturkautschuk-Latex (73 Gew.-%) zugefügt und auf 80 °C erwärmt. Nachdem die Masse homogen erschien (ca. 1/2 Stunde) wurde in Stifthülsen abgefüllt. Die erhaltenen formstabilen Stife wiesen ganz ähnliche Eigenschaften auf wie gemäß Beispiel 1 hergestellte.

## Ansprüche

1. Weich abreibbarer Klebstift auf Basis einer mit erstarrtem Seifengel verdickten Lösung von wasserdispergierbaren, natürlichen Polymersubstanzen mit Klebstoffcharakter in einem wässrig, organischem Lösungsmittelgemisch, dadurch gekennzeichnet, daß die Stiftmasse als klebende Komponente eine Kombination aus Naturkautschuk-Latex und klebrig machenden Harzen enthält.

2. Klebestift nach Anspruch 1, dadurch gekennzeichnet, daß die klebrig machenden Harz einen Erweichungspunkt oberhalb von 50 °C, vorzugsweise oberhalb von 60 bis etwa 120 °C, haben.

3. Klebestift nach Anspruch 1 bis 2, dadurch gekennzeichnet, daß die klebrig machenden Harze in Form einer wässrigen, feinteiligen Emulsion vom Typ O/W eingesetzt werden.

4. Klebestift nach Anspruch 1 bis 3, dadurch gekennzeichnet, daß er aus einer wässrigen Phase besteht, die bezogen auf die Gesamtzusammensetzung enthält

5 bis 14, insbesondere 8 bis 12 Gew.-%, Natriumsalz von Fettsäure ($C_{14}$-$C_{18}$)

8 bis 40, insbesondere 10 bis 35 Gew.-%, Naturkautschuk

6 bis 45, insbesondere 8 bis 30 Gew.-%, klebrig machendes Harz sowie

0 bis 15, insbesondere 5 bis 10 Gew.-%, aliphatisches Polyol mit 3 bis 6 Kohlenstoffatomen im Molekül und/oder Polyethylenglykole mit einem Molgewicht von etwa 200 bis 1000

restliche Gew.-% Wasser.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | US-A-4 644 026 (R.J. SHUMAN) <br> * Ansprüche 1-15 * <br> --- | 1,2 | C 09 J 3/00 <br> C 09 J 3/12 |
| A | US-A-2 325 562 (H.E. WENING) <br> * Patentanspruch; Seite 1, rechte Spalte, Zeilen 33-47 * <br> --- | 1 | |
| A | CH-A- 493 612 (PLASTIC-FIN) <br> * Patentanspruch; Spalte 2, Zeilen 1-3 * <br> --- | | |
| A | FR-A-2 390 487 (POLYSAR) <br> ----- | | |

RECHERCHIERTE SACHGEBIETE (Int. Cl.4)

C 09 J

Der vorliegende Recherchenbericht wurde für alle Patentansprüche erstellt

| Recherchenort | Abschlußdatum der Recherche | Prüfer |
|---|---|---|
| DEN HAAG | 11-05-1988 | GIRARD Y.A. |